(19) Europäisches Patentamt / European Patent Office / Office européen des brevets

(11) **EP 4 407 924 A1**

(12) **EUROPEAN PATENT APPLICATION**
published in accordance with Art. 153(4) EPC

(43) Date of publication:
**31.07.2024   Bulletin 2024/31**

(21) Application number: **22872265.8**

(22) Date of filing: **16.09.2022**

(51) International Patent Classification (IPC):
*H04L 9/06* (2006.01)

(86) International application number:
**PCT/ES2022/070587**

(87) International publication number:
**WO 2023/047003 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.09.2021   ES 202130890**

(71) Applicant: **Universitat Politècnica de València**
**46022 Valencia (ES)**

(72) Inventors:
- **LÓPEZ RODRÍGUEZ, Damián**
  **46022 Valencia (ES)**
- **LARRIBA FLOR, Antonio Manuel**
  **46022 Valencia (ES)**

(74) Representative: **Pons**
**Glorieta Rubén Darío 4**
**28010 Madrid (ES)**

(54)  **DISTRIBUTED REGISTRATION METHOD FOR CONTROLLING ANONYMOUS ACCESS**

(57)   The present invention relates to a method for controlling access to remote resources with D distributors and N guards, said method comprising generating a $q_i(x)$ function or a $m_i$ value by means of each distributor; dividing each $q_i(x)$ function or each $m_i$ value into N portions; sending one portion to each guard; a user sending an identifier and a $P_{tu}$ value to the distributors; calculating and sending to the user the result of the $q_i(P_{tu})$ function or $P_{tu}^{m_i}$ value; a user calculating a $y_u$ value equal to the sum total of the results of $q_i(P_{tu})$ or the product total of the $P_{tu}^{m_i}$; each guard calculating its own $p_j(x)$ function or its own $n_j$ value; a user sending to each guard the $P_{tu}$ and $y_u$ values; each guard calculating the value of the its own $p_j(P_{tu})$ function or the product total of the $P_{tu}^{n_j}$ values; communicating to the rest of the guards the obtained $p_j(x)$ values; verifying $y_u$; and giving access to the resource.

Fig .1

EP 4 407 924 A1

**Description**

**OBJECT OF THE INVENTION**

The invention relates to a distributed registration method and system for controlling anonymous access to resources and services.

A first object of the invention relates to a computer-assisted distributed registration method that allows controlling access with limited communication between parties, minimal user interaction, and without the need to store identification information.

Another object of the invention relates to a distributed registration system comprising means for managing anonymous access to resources and services.

**BACKGROUND OF THE INVENTION**

There are various solutions in the field of anonymous authentication methods and systems.

Some solutions, such as those reflected in documents WO2008065341A2 (MAIDSAFE FOUND) and GB2444346, relate to distributed network systems that provide privacy, security, and freedom to their users, facilitating their intercommunication and anonymous access to their own or shared resources. These systems allow access by means of anonymous authentication using encryption algorithms.

In turn, document WO2017145010A1 (NCHAIN HOLDINGS) describes a computer-implemented method which controls access to a digital wallet implemented using blockchain technology. The method divides a verification element (private key) into multiple fractions that are transmitted by means of a common secret between two or more nodes. To divide the secret S into fractions (n being the number of participants), a polynomial y=f(x) of degree k-1 (mod p) is constructed in a random or pseudo-random manner, where k is a threshold number and p a prime number, such that the secret can be divided into portions and later reconstructed by means of a set of known points.

Document CN111416705A (NANJING RUBAN QUANTUM TECHNOLOGY) introduces a system and method for electronic voting based on cryptographic anonymous identification, blockchain, and secret sharing technologies, capable of resisting quantum computing attacks and reducing computing times for the use of blind digital signatures.

Document ES2255455A1 (SCYTL ON LINE WORLD SECURITY) describes a method to securely conduct electronic voting and poll over a communications network by means of interrelated cryptographic processes and protocols, designed to facilitate the tasks of vote casting, counting, and secure verification, allowing voter privacy, result accuracy, and the impossibility of coercion and sale of votes.

However, the solutions provided by the state of the art do not allow controlling access to a guarded resource in a distributed, efficient, and simpler manner with less computational cost for the parties.

**DESCRIPTION OF THE INVENTION**

The present invention relates to a computer-assisted method for controlling anonymous and distributed access to remote resources or services which uses one or more central authorities, or distributors, and N authorities responsible for controlling access to the resource or service, referred to as guards, wherein N is greater than or equal to 1, and wherein the method comprises the steps of:

- each of the distributors generating a $q_i(x)$ function or a $m_i$ value;
- dividing each $q_i(x)$ function or each $m_i$ value into N portions ($q_{ij}(x)$ or $m_{ij}$), such that the $q_i(x)$ function is a linear combination of the $q_{ij}(x)$ portions or the $m_i$ value is equal to the sum total of the N portions $m_{ij}$;
- each distributor sending a portion of its $q_{ij}(x)$ function or its $m_{ij}$ value to each guard;
- if there is more than one distributor, each guard calculating its own $p_j(x)$ function equal to the sum total of the functions received from each distributor or its own $n_j$ value equal to the sum total of the values $m_{ij}$ received from each distributor;
- the user sending one or more distributors an identifier and a $P_{tu}$ value;
- one or more distributors calculating and sending to the user the result of the generated $q_i(x)$ function for $P_{tu}$ or the $P_{tu}^{m_i}$ value reduction modulo p, where p is a value previously agreed upon;
- if there is more than one distributor, the user calculating a $y_u$ value equal to the reduction modulo p of the sum total of the results of the generated $q_i(x)$ function of each distributor for $P_{tu}$ or of the product total of the results of the $P_{tu}^{m_i}$ value of each distributor;
- sending to each guard the $P_{tu}$ and $y_u$ values;

- each guard calculating the result for $P_{tu}$ of its own function $p_j(x)$ or the result of $P_{tu}^{n_j}$ modulo p using its own $n_j$ value;
- verifying that $y_u$ is equal to the reduction modulo p of the sum of the result of all own $p_j(x)$ functions or the product total of the $P_{tu}^{n_j}$ values using own $n_j$ values;
- giving access to a resource if the verification is positive.

Two different methods for controlling access to a remote resource (such as an electronic voting ballot box, a blockchain, or a smart parcel box, for example) that solve the problem in controlling distributed and anonymous access to a guarded resource, can preferably be obtained from the steps of the method.

Therefore, the aim is to give access to a resource guarded by a set of guards that distrust one another. To access the resource, all the guards must verify that the credentials presented are correct. At the same time, the credentials must not reveal any type of information about the user seeking access, guaranteeing the owner of the credential a single access to the resource.

The first method preferably has a respectable central authority (distributor) that is assumed to be honest and is responsible for generating access credentials, regardless of the form they may take.

Furthermore, a set of N authorities responsible for controlling access to a certain resource or service (or guards) is incorporated. The set of guards does not consider the distributor as a member. The scenario is completed with a set of m duly identified users.

The distributor's job is twofold: first, it establishes the system by distributing credentials (regardless of the form they may take) to users and validation tools to guards and, secondly, it is responsible for auditing possible identification errors among the users and guards.

On the one hand, only the distributor can link users to their credentials; on the other hand, the distributor is not provided with any information about how that protected resource will be used.

Therefore, in this first method the following set of steps is followed:

1. System configuration

    1.1. The central authority (or distributor) distributes enough information to the access control authorities (or guards) that it is necessary for them all to collaborate to agree on the validity of a credential.
    1.2. The distributor generates sufficient structures to check for the prior issuance of credentials to users.

2. User identification and registration

    2.1. A user sends his/her identification to the central authority.
    2.2. The central authority verifies the received identification and the prior issuance of credentials to that user.
    2.3. If the checking of identification and prior issuance so allow, an anonymous access credential is returned to the user.

3. Access control

    3.1. The users send their access credential to all guards and the action to be performed on the resource.
    3.2. The guards collectively agree on the validity or non-validity of the credential.
    3.3. If correct, the action indicated by the user is performed.
    3.4. The guards provide the user with guarantee that the action has been performed or provide the user with permission to perform the action.

4. Guard audit
    4.1. If necessary (denial of access), the user can turn to the distributor to detect errors or malicious behaviour of any of the guards.

The second method furthermore allows distributing the responsibility for generating access credentials among a set of accredited authorities or distributors.

Likewise, a set of N authorities, which is distinct from the set of distributors responsible for controlling access (or guards), and a set of m duly identified users are included.

Therefore, in this second method the following set of steps is followed:

1. System configuration

1.1. Each of the distributors generates sufficient structures to be able to check for the prior issuance of credentials to users.

1.2. Each of the registration authorities (distributors) sends to all the access control authorities (guards) individualised information to participate in access control.

1.3. Each of the guards configures, with the information received from each and every one of the distributors, their access control tool.

2. User identification and registration

2.1. The users send to each and every one of the distributors, their identification along with a prior credential to build the accreditation therefrom.

2.2. Each of the distributors verifies the identification credentials received, returning to the user, if said credentials are correct, an anonymous access accreditation component built from the prior credential received. Therefore, this accreditation component, in isolation, is not valid for access to the resource.

2.3. Once all the accreditation components have been received, the user combines all of them to obtain the access accreditation.

3. Access control

3.1. The users send their access credential to all guards and the action to be performed on the resource.

3.2. The guards collectively agree on the validity or non-validity of the credential.

3.3. If the credentials are correct, the indicated action is performed, or the user is enabled to perform it.

3.4. If the action is performed, the guards provide the user with a guarantee that the action has been performed.

4. Guard audit

4.1. If necessary (such as denial of access, for example), a user can turn to the distributors to detect errors or malicious behaviour of any of the guards.

In this second method, it is considered that the prior credential and the received accreditation component can allow the user to obtain an anonymous credential that is impossible for distributors to link to his/her identity.

The invention also relates to a system for controlling anonymous and distributed access to remote resources or services comprising a first set of one or more processing units acting as distributors, a second set of one or more processing units acting as guards, and a third set of one or more processing units acting as users, configured for carrying out the steps of the described method.

Some of the possible applications of the method of the invention are, among others:

- Electronic voting: For controlling access to the voters' ballot box and its unique access, maintaining and respecting privacy so that the vote remains secret.
- Access to blockchains: For controlling user access in a blockchain environment, preventing the "double spending" problem that would allow malicious users to spend more resources (coins) than they actually have.
- Credit cards: For generating access credentials but requiring that the credential be only known to the user and not be stored on any server.
- Access to smart parcel boxes: Allowing courier companies to control user access to lockers (guaranteeing single access to them), with the possibility of distributing access control between the locker itself, the courier company, and the user.
- Secret sharing: By means of a counter guarded by guards to manage a "secret" (regardless of the form it may take) that should only be accessible to the members of a group, being able to force the "secret" to be only accessible if all users of the group consider it as such.

Likewise, the following advantages are identified with respect to solutions of the state of the art:

- The protocols allow unidentified user access, allowing use thereof in sensitive contexts.
- It distributes access control, and even the attainment of credentials, maintaining the anonymity of users with respect to access control authorities or distributors.
- Despite distributing access control, communication between the different parties is limited, allowing a low computational cost implementation.

- User interaction is minimal. It only required one message to obtain credentials and another message to access the resource. It is a protocol that does not require active user participation, in which the authorities do not depend on the user response, reducing the dialogue between the parties involved, so the execution of the phases is not blocked waiting for previous results, reducing the possibility of denial-of-service attacks.
- It can be implemented without storing information on servers that act as guards or distributors, being resistant to various types of attacks.

In summary, the method of the invention solves the problem of access to a guarded resource in a distributed, efficient, and simpler manner insofar as the dialogue between the different parties involved is reduced and with less computational cost for the parties.

## DESCRIPTION OF THE DRAWINGS

In order to complement the description being made and with the object of helping to better understand the features of the invention, in accordance with a preferred practical exemplary embodiment thereof, said description is accompanied, as an integral part thereof, by a set of drawings where, in an illustrative and non-limiting manner, the following has been represented:

Figure 1 shows a block diagram depicting a preferred embodiment of the first implementation of the method of the invention.

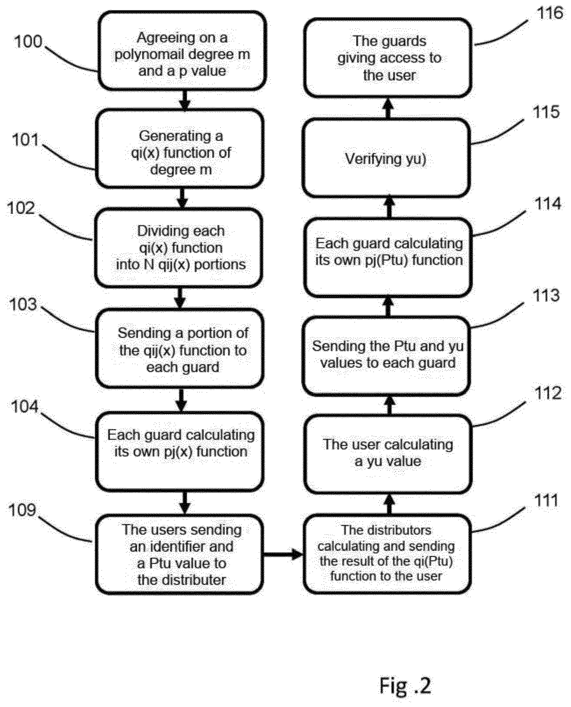

Figure 2 shows a block diagram depicting a preferred embodiment of the second implementation of the method of the invention.

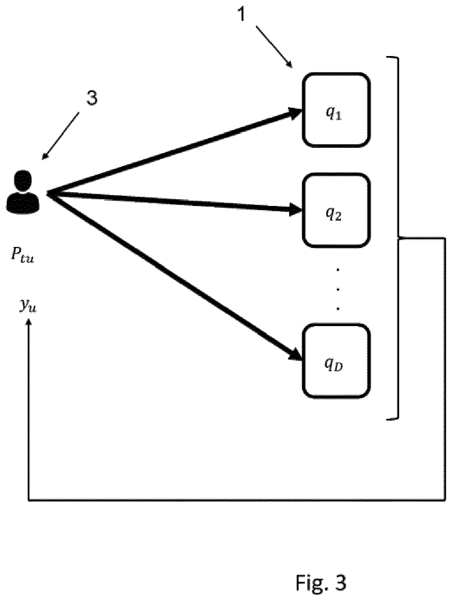

Figure 3 shows a diagram of the distribution of the polynomials generated by the distributors among the guards and the generation of the own function of each guard.

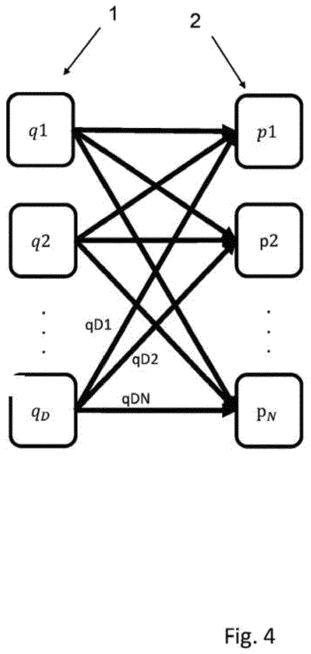

Figure 4 shows a diagram of the identification and assignment of credentials to a user who sends his/her identification to the distributors.

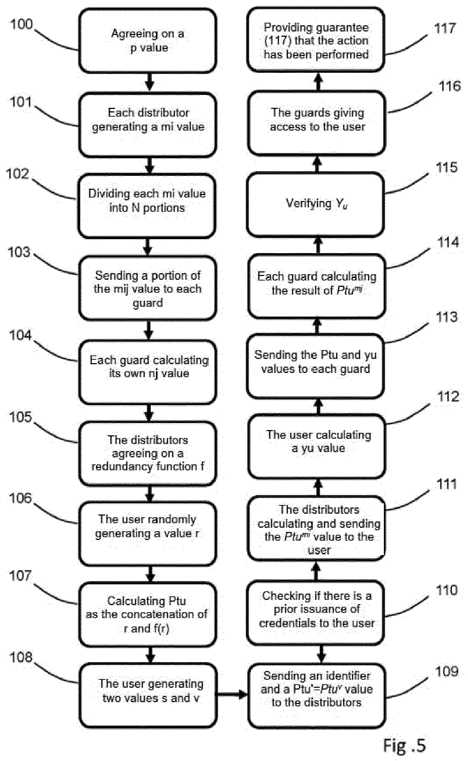

Figure 5 shows a block diagram depicting a preferred embodiment of the third implementation of the method of the invention.

## PREFERRED EMBODIMENT OF THE INVENTION

The present invention relates to a method for controlling anonymous and distributed access which allows controlling access to a resource or service anonymously and distributing access control and credential generation.

Three implementation examples with post-quantum security and/or anonymity properties are presented below.

The first example allows providing single-use credentials, guaranteeing the maintenance of user anonymity along with the guarantee that, unless all access control authorities (guards) are compromised, it is not possible to fraudulently generate valid credentials.

In this case, the existence of an honest central entity that acts as distributor (1) is assumed, the method also comprises a set of N guards (2) responsible for controlling access and a set of duly accredited m users (3).

The distributor (1) is responsible for establishing the system by distributing credentials to users (3) and auditing possible identification errors among the users (3) and guards (2).

On the one hand, in this case, only the distributor (1) can link users (3) to their credentials; while on the other hand, the distributor (1) is not provided with any information about how the protected resource will be used.

This first embodiment of the method of the invention begins with the generation (100) of a sufficiently large prime number p, and the generation (101) of a polynomial of degree m, taking into consideration the result modulo p, when it is necessary to calculate the value of the polynomial for a specific value x. The value of m, the maximum degree of the polynomial, must be less than p-1, and it is not necessary to take into consideration a polynomial with all coefficients other than zero:

$$q(x) = a_m x^m + a_{m-1} x^{m-1} + \cdots + a_1 x + a_o \qquad \text{mod p}$$

Once $q(x)$ is generated, the authority divides (102) it into N polynomials ($p_j(x)$):

$$q_1(x) = a_{1m}x^m + a_{1m-1}x^{m-1} + \cdots + a_{11}x + a_{10} \quad \text{mod p}$$

$$q_2(x) = a_{2m}x^m + a_{2m-1}x^{m-1} + \cdots + a_{21}x + a_{20} \quad \text{mod p}$$

$$q_N(x) = a_{Nm}x^m + a_{Nm-1}x^{m-1} + \cdots + a_{N1}x + a_{N0} \quad \text{mod p}$$

such that the fractional polynomials complement one another to obtain the coefficients of $q(x)$, in other words:

$$a_i = \sum_{1 \le j \le N} a_{ji} \qquad \forall i, 0 \le i \le m$$

Each of the fractional polynomials is assigned and sent (103) securely to each of the guards (2). Therefore, unless all guards (2) collaborate, it is impossible for a subset of guards (2) to obtain the original polynomial $q(x)$.

Once the system has been configured, users (3) are allowed to obtain their credentials. To that end, the users (3) send (109) their identifications to the distributor (1), which once verified as relevant, the distributor (1) generates a random $P_{tu}$ value and use the polynomial to calculate and send (111) to the user (3) the $(P_{tu}, q(P_{tu}))$ point of the polynomial $q(x)$. These points function as anonymous credentials for the guards (2) that guard the resource. The distributor (1) is responsible for not generating two points with the same $P_{tu}$ coordinate.

Unless the number of users (3) exceeds the limit m, it is impossible for any set of users (3) to forge new credentials.

In the proposed method, the size of modulo p has no relevant influence on the security of the system, but it must be greater than m. Furthermore, the use of modular arithmetic limits the size of credentials while not restricting working with a large number of users (3). Therefore, for example, a value of m of 30 bits is not large in terms of computational time and is large enough to provide credentials to everyone on earth.

Once the credentials have been delivered, for the users (3) to be able to access the resource or service, they must send (113) their credentials to all the guards (2) which calculate (114) the result of $p_j(P_{tu})$, and collaborate to verify (115) that the received credential $(P_{tu}, q(P_{tu}))$ meets the following:

$$q(P_{tu}) = \sum_{1 \le i \le N} q_i(P_{tu}) \text{ mod p}$$

Finally, access is given (116) to the user (3) after the guards (2) verify the received credential.

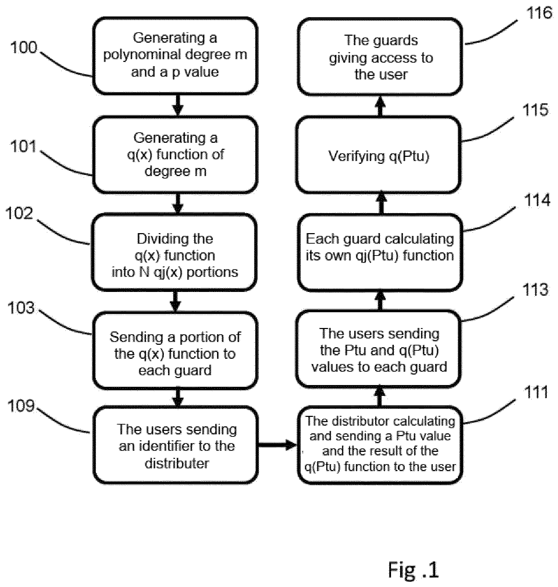

Figure 1 shows a diagram of the first embodiment of the method of the invention. This implementation provides the possibility of accessing a resource anonymously.

The second implementation distributes credential generation among a set of D distributors (1) that are assumed to be honest, guaranteeing the anonymity of the users (3) with respect to the guards (2) and the impossibility of generating fraudulent accreditations, even in a post-quantum scenario, unless either all the distributors (1) or all the guards (2) agree to violate the system.

To initially configure the system, the distributors (1) first agree (100) on a modular value p and the degree m of a polynomial $q(x)$ to be built. Next, each distributor (1) independently generates (101) a polynomial $q_i(x)$ of degree m and modulo p. This polynomial $q_i(x)$ is divided (102) independently and freely into N complementary $q_{ij}(x)$ portions, such that:

$$q_i(x) = \left( \sum_{j=1}^{N} q_{ij}(x) \right) \text{ mod p}$$

Next, the distributors (1) send (103) over a secure channel to each guard (2) one of the partitions $q_{ij}$. In this way, each guard (2) receives the partitions from each of the distributors (1) and calculates (104) its own polynomial $p_j(x)$ as:

$$p_j(x) = \left( \sum_{i=1}^{D} q_{ij}(x) \right) \text{ mod p}$$

Therefore, $p_j(x)$ is the result of adding up all the functions received from each distributor (1), such that the polynomial of each guard (2) cannot be known by any distributor (1), unless all of them agree to share their polynomial

$q_i(x)$ and violate the system.

Furthermore, with respect to the polynomials known by the distributors (1) and the guards (2), the following is met:

$$\sum_{i=1}^{D} q_i(x) \, mod \, p = \sum_{j=1}^{N} p_j(x) \, mod \, p$$

To obtain their credentials, the users (3) send (109) their identification along with a $P_{tu}$ integer such that $p > P_{tu}$ to each of the distributors (1). These are responsible for ensuring that there are no duplicates of $P_{tu}$, in which case, the user (3) will be prompted to choose a different $P_{tu}$ or he/she will be assigned one agreed upon by the distributors (1).

Each distributor (1) checks the identification of the user (3) and, if it is correct, responds by calculating and sending (111) the result of $q_i(P_{tu})$ mod p. Once the response is received from all the distributors (1), the users (3) can calculate (112) their credentials as:

$$\left( P_{tu}, y_u = (\sum_{i=1}^{D} q_i(P_{tu})) mod \, p \right)$$

Once the credentials have been delivered, for the users to be able to access the resource or service, they must send (113) their credentials $(P_{tu}, y_u)$ to all the guards which must calculate (114) the result of $p_j(P_{tu})$, and collaborate to verify (115) that the received credential meets the following:

$$y_u = \left( \Sigma_{1 \leq i \leq N} p_j(P_{tu}) \right) \text{mod p}$$

Finally, access is given (116) to the user (3) after the guards (2) verify the received credential.

The third proposed implementation allows maintaining the anonymity of users (3) also with respect to the distributors (1). In fact, this implementation guarantees the anonymity of users (3) with respect to any authority involved, making it impossible for information extracted from compromised authorities to allow the generation of malicious credentials as long as there is an uncompromised authority and there is no solution for the discrete logarithm problem (current basis of security in public key cryptographic systems). Therefore, this implementation allows the privacy of the user (3) to be protected during the registration phase, eliminating the connection existing between the identity of the user (3) and his/her credentials. For this work, homomorphic cryptography is used to hide the credential information that distributors (1) have access to. The implementation presented guarantees the anonymity of users (3) with respect to the authorities (even in post-quantum scenarios), preventing the generation of malicious credentials as long as the problem of the discrete logarithm (basis of many current public key cryptographic protocols) remain secure.

In this implementation, D distributors (1) responsible for generating access credentials and a group of N guards (2) are taken into consideration.

The configuration of the system implies that the distributors (1) agree (100) in advance on a prime modular value p, and that each of the distributors (1) generates (101) a random $m_i$ integer less than (p-1). Furthermore, the distributors (1) agree (105) on a redundancy function $f(x)$. Next, each distributor (1) divides (102) the $m_i$ integer into N portions such that:

$$m_i = \sum_{j=1}^{N} m_{ij} \, mod \, p$$

The portions $m_{ij}$ are sent (103) to the guards (2) through secure channels. Each guard (2) can then calculate (104) its own value from the portions received from the distributors (1):

$$n_j = \left( \Sigma_{i=1}^{N} m_{ij} \right) \text{mod p}$$

Therefore, at the end of the distribution phase, both the distributors (1) and the guards (2) have different information to build the same secret integer m that is never stored anywhere. That is, m is the result of the sums:

$$m = \sum_{i=1}^{D} m_i \, mod p = \sum_{j=1}^{N} n_j \, mod p$$

In the identification phase, before starting communication with the distributors (1), each user (3) generates (108) a pair of integers s and v such that the product v*s reduction modulo (p-1) is equal to 1. The registration phase begins when user u privately selects an integer $P_{tu}$, which, to avoid attacks based on the homomorphic properties of the modular product, contains the result of a redundancy function previously agreed upon (105). Thus, $P_{tu}$ it is calculated (107) as the result of the concatenation of a random value r previously generated (106) and the result of $f(r)$.

The generated value will be part of the credential of the user (3), so in order for the distributors (1) to not be able to link the received credential to the identifier of the user (3), the integer $P_{tu}$ is masked as $P'_{tu} = P_{tu}^{v} mod p$ before sending (109) the user identification along with the $P'_{tu}$ value to each of the distributors (1).

If the identification is correct and it is previously checked (110) that there is no prior issuance of credentials to said user (3), each distributor (1) calculates and sends (111) the $\left(P'_{tu}\right)^{m_i}$ value reduction modulo p to the user.

For a sufficiently large p value, the probability that two users (3) generate the same $P_{tu}$ is extremely low, practically negligible with p values of 1024 bits, which is a conservative number of bits by current standards.

Once the response from the distributors (1) is received, the user (3) can calculate (112) his/her access credentials as:

$$\left( x_u, y_u = \prod_{i=1}^{D} ((P'_{tu})^{m_i})^s \, mod p \right)$$

Such that:

$$y_u = \prod_{i=1}^{D} \left( (P'_{tu})^{m_i} \right)^s mod p = \prod_{i=1}^{D} \left( (P_{tu}^{v})^s \right)^{m_i} mod p = P_{tu}^{\sum_{i=1}^{D} m_i} mod p = P_{tu}^{m} mod p$$

where m is the integer previously agreed upon, but unknown to both guards (2) and distributors (1).

Furthermore, $P'_{tu} = P_{tu}^{v} \bmod p$ is the only value transmitted to the distributors and is insufficient to reveal the hidden $P_{tu}$ value. Once the credentials have been delivered, for the users (3) to be able to access (116) the resource or service, they must send (113) their credentials to all the guards which must calculate (114) the result of ( $P_{tu}^{n_j}$ ) and collaborate to verify (115) that the received credential meets the following:

$$y_u = \prod_{1 \le j \le N} (P_{tu})^{n_j} \bmod p$$

Finally, access (116) is given to the user (3) after the guards (2) verify the received credential, or the requested action (116) is performed, and the user (3) is provided with guarantee (117) that the action has been performed.

**Claims**

1.  A computer-assisted method for controlling anonymous and distributed access to remote resources or services which uses one or more central authorities, or distributors (1), and N authorities responsible for controlling access to the resource or service, referred to as guards (2), wherein N is greater than or equal to 1, and wherein the method comprises the steps of:

    - the distributors (1) agreeing (100) on a prime p value, such that the generated polynomial $q_i(x)$ is obtained taking into consideration the result reduction modulo p;
    - each of the distributors (1) generating (101) a $q_i(x)$ function or a $m_i$ value;
    - dividing (102) each $q_i(x)$ function or each $m_i$ value into N portions, such that the $q_i(x)$ function is a linear combination of the $q_{ij}(x)$ portions or the $m_i$ value is equal to the sum total of the N portions $m_{ij}$;
    - each distributor (1) sending (103) a portion of its $q_{ij}(x)$ function or its $m_{ij}$ value to each guard (2);
    - if there is more than one distributor (1), each guard (2) calculating (104) its own $p_j(x)$ function equal to the sum total of the functions received from each distributor or its own $n_j$ value equal to the sum total of the values received from each distributor;
    - a user (3) sending (109) to the one or more distributors an identifier and, if more than one distributor is taken into consideration, a $P_{tu}$ value;
    - one or more distributors (1) calculating and sending (111) to the user (3) the result of the generated $q_i(x)$ function for $P_{tu}$ or the $P_{tu}^{m_i}$ value if the identification is positive;
    - if there is more than one distributor (1), the user calculating (112) a $y_u$ value equal to the reduction modulo p of the sum total of the results of the generated $q_i(x)$ function of each distributor (1) for $P_{tu}$ or of the product total of the results of the $P_{tu}^{m_i}$ value of each distributor (1);
    - sending (113) to each guard (2) the $P_{tu}$ and $y_u$ values;
    - each guard (2) calculating (114) the result for $P_{tu}$ of its own function $p_j(x)$ or the result of $P_{tu}^{m_j}$ modulo p using its own $n_j$ value;
    - verifying (115) that $y_u$ is equal to the reduction modulo p of the sum of the result of all own $p_j(x)$ functions or the product total of the $P_{tu}^{mj}$ values using own $n_j$ values;
    - giving access (116) to a resource if the verification is positive.

2.  The method according to claim 1, wherein the distributors (1) agree (105) on a redundancy function f and the user (3) randomly generates (106) a value r, such that $P_{tu}$ is calculated (107) as the concatenation of r and f(r).

3.  The method according to any of claims 1 to 2, wherein, if there is more than one distributor (1), the user (3) generates two values (108) s and v, such that the product s*v reduction modulo (p-1) is equal to 1; and wherein the value that is sent (109) to the one or more distributors along with the identifier is $P'_{tu} = P_{tu}^{v}$ modulo p and $y_u$ is equal to the product total of the $\left( P_{tu}^{mj} \right)^{s}$ values.

4.  The method according to any of claims 1 to 3, wherein in the step of the one or more distributors (1) calculating and sending (111) to the user (3) the result of the generated $q_i(x)$ function for $P_{tu}$ or of the $P_{tu}^{m_i}$ value, it is previously checked (110) if there is a previous issuance of credentials to said user (3).

5.  The method according to any of claims 1 to 4, wherein the user (3) specifies an action to be performed on a resource to the guards (2), which perform said action or give access (116) to the user (3) to perform the action if the verification step is positive and provide the user (3) with guarantee (117) that the action has been performed.

6.  A system for controlling anonymous and distributed access to remote resources or services comprising a first set of one or more processing units acting as distributors, a second set of one or more processing units acting as guards, and a third set of one or more processing units acting as users, configured for carrying out the steps of:

- each of the distributors (1) generating (101) a $q_i(x)$ function or a $m_i$ value;
- dividing (102) each $q_i(x)$ function or each $m_i$ value into N portions, such that the $q_i(x)$ function is a linear combination of the $q_{ij}(x)$ portions or the $m_i$ value is equal to the sum total of the N portions $m_{ij}$;
- each distributor (1) sending (103) a portion of its $q_{ij}(x)$ function or its $m_{ij}$ value to each guard (2);
- if there is more than one distributor (1), each guard (2) calculating (104) its own $p_j(x)$ function equal to the sum total of the functions received from each distributor or its own $n_j$ value equal to the sum total of the values received from each distributor;
- a user (3) sending (109) to the one or more distributors an identifier and a $P_{tu}$ value;
- one or more distributors (1) calculating and sending (111) to the user (3) the result of the generated $q_i(x)$ function for $P_{tu}$ or the $P_{tu}^{m_i}$ value if the identification is positive;
- if there is more than one distributor (1), the user calculating (112) a $y_u$ value equal to the reduction modulo p of the sum total of the results of the generated $q_i(x)$ function of each distributor (1) for $P_{tu}$ or of the product total of the results of the $P_{tu}^{m_i}$ value of each distributor (1);
- sending (113) to each guard (2) the $P_{tu}$ and $y_u$ values;
- each guard (2) calculating (114) the result for $P_{tu}$ of its own function $p_j(x)$ or the result of $P_{tu}^{m_j}$ modulo p using its own $n_j$ value;
- verifying (115) that $y_u$ is equal to the reduction modulo p of the sum of the result of all own $p_j(x)$ functions or the product total of the $P_{tu}^{mj}$ values using own $n_j$ values;
- giving access (116) to a resource if the verification is positive.

7. A computer program, **characterised in that** it is adapted to cause the processing units to perform the steps of the method according to any of claims 1 to 5.

8. A machine-readable storage device, **characterised in that** it comprises the computer program according to claim 7.

Generating a
polynominal degree m
and a p value — 100

Generating a
q(x) function of
degree m — 101

Dividing the
q(x) function
into N qj(x) portions — 102

Sending a portion of
the q(x) function to
each guard — 103

The users sending
an identifier to the
distributer — 109

The distributor calculating
and sending a Ptu value
and the result of the
q(Ptu) function to the user — 111

The users sending
the Ptu and q(Ptu)
values to each guard — 113

Each guard calculating
its own qj(Ptu) function — 114

Verifying q(Ptu) — 115

The guards
giving access to
the user — 116

Fig .1

100 — Agreeing on a polynomail degree m and a p value

101 — Generating a qi(x) function of degree m

102 — Dividing each qi(x) function into N qij(x) portions

103 — Sending a portion of the qij(x) function to each guard

104 — Each guard calculating its own pj(x) function

109 — The users sending an identifier and a Ptu value to the distributer

111 — The distributors calculating and sending the result of the qi(Ptu) function to the user

112 — The user calculating a yu value

113 — Sending the Ptu and yu values to each guard

114 — Each guard calculating its own pj(Ptu) function

115 — Verifying yu)

116 — The guards giving access to the user

Fig .2

Fig. 3

Fig. 4

100 — Agreeing on a
p value

101 — Each distributor
generating a mi value

102 — Dividing each mi value
into N portions

103 — Sending a portion of
the mij value to each
guard

104 — Each guard calculating
its own nj value

105 — The distributors
agreeing on a
redundancy function f

106 — The user randomly
generating a value r

107 — Calculating Ptu
as the concatenation of
r and f(r)

108 — The user generating
two values s and v

117 — Providing guarantee
(117) that the action
has been performed

116 — The guards giving
access to the user

115 — Verifying $Y_u$

114 — Each guard calculating
the result of $Ptu^{mi}$

113 — Sending the Ptu and yu
values to each guard

112 — The user calculating
a yu value

111 — The distributors
calculating and sending
the $Ptu^{mi}$ value to the
user

110 — Checking if there is a
prior issuance of
credentials to the user

109 — Sending an identifier
and a $Ptu'=Ptu^v$ value
to the distributors

Fig .5

## INTERNATIONAL SEARCH REPORT

| International application No. |
|---|
| PCT/ES2022/070587 |

**A. CLASSIFICATION OF SUBJECT MATTER**

*H04L9/06* (2006.01)

According to International Patent Classification (IPC) or to both national classification and IPC

**B. FIELDS SEARCHED**

Minimum documentation searched (classification system followed by classification symbols)
H04L

Documentation searched other than minimum documentation to the extent that such documents are included in the fields searched

Electronic data base consulted during the international search (name of data base and, where practicable, search terms used)

EPODOC, INVENES, WPI, NPL, XPIEE, XPI3E

**C. DOCUMENTS CONSIDERED TO BE RELEVANT**

| Category* | Citation of document, with indication, where appropriate, of the relevant passages | Relevant to claim No. |
|---|---|---|
| A | US 2019386972 A1 (BOUTNARU SHLOMI) 19/12/2019, the whole document | 1-8 |
| A | EP 3379767 A1 (HEWLETT PACKARD DEVELOPMENT CO) 26/09/2018, the whole document | 1-8 |
| A | US 2020052890 A1 (BARON JOSHUA W ET AL.) 13/02/2020, the whole document | 1-8 |
| A | CN 109495248 A (CAO MINGPEI) 19/03/2019, The whole the document | 1-8 |
| A | WO 2019046651 A2 (INPHER INC) 07/03/2019, The whole the document | 1-8 |

☐ Further documents are listed in the continuation of Box C.      ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 22/11/2022 | (22/11/2022) |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> M. Muñoz Sanchez <br><br><br> Telephone No. 91 3495349 |

Form PCT/ISA/210 (second sheet) (January 2015)

## INTERNATIONAL SEARCH REPORT

Information on patent family members

International application No.

PCT/ES2022/070587

| Patent document cited in the search report | Publication date | Patent family member(s) | Publication date |
|---|---|---|---|
| US2019386972 A1 | 19.12.2019 | US2022094678 A1 | 24.03.2022 |
| | | CN112567365 A | 26.03.2021 |
| | | EP3807793 A1 | 21.04.2021 |
| | | EP3807793 A4 | 02.06.2021 |
| | | WO2019241432 A1 | 19.12.2019 |
| | | US11240220 B2 | 01.02.2022 |
| EP3379767 A1 | 26.09.2018 | US2020396212 A1 | 17.12.2020 |
| | | US2018278594 A1 | 27.09.2018 |
| | | US10771444 B2 | 08.09.2020 |
| US2020052890 A1 | 13.02.2020 | CN112425120 A | 26.02.2021 |
| | | CN112385176 A | 19.02.2021 |
| | | US2020084159 A1 | 12.03.2020 |
| | | US10862908 B2 | 08.12.2020 |
| | | EP3834366 A1 | 16.06.2021 |
| | | EP3834366 A4 | 27.04.2022 |
| | | EP3834359 A1 | 16.06.2021 |
| | | EP3834359 A4 | 08.06.2022 |
| | | WO2020033033 A1 | 13.02.2020 |
| | | WO2020033048 A1 | 13.02.2020 |
| | | US10887092 B2 | 05.01.2021 |
| CN109495248 A | 19.03.2019 | CN109495248B B | 20.07.2021 |
| WO2019046651 A2 | 07.03.2019 | US2021167948 A1 | 03.06.2021 |
| | | US2020358601 A1 | 12.11.2020 |
| | | US10917235 B2 | 09.02.2021 |
| | | JP2020532771 A | 12.11.2020 |
| | | US2020304293 A1 | 24.09.2020 |
| | | CN111543025 A | 14.08.2020 |
| | | IL272824 A | 30.04.2020 |
| | | IL272824 B | 31.08.2021 |
| | | SG11202001591U A | 30.03.2020 |
| | | KR20200044103 A | 28.04.2020 |
| | | CA3072638 A1 | 07.03.2019 |
| | | EP3676985 A2 | 08.07.2020 |
| | | EP3676985 B1 | 29.09.2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008065341 A2
- GB 2444346 A
- WO 2017145010 A1
- CN 111416705 A
- ES 2255455 A1